# EUROPÄISCHE PATENTSCHRIFT

(11) **EP 2 196 118 B1**
(45) Veröffentlichungstag und Bekanntmachung des Hinweises auf die Patenterteilung: **25.07.2012**
(21) Anmeldenummer: 09014716.6
(22) Anmeldetag: 26.11.2009
(51) Int. Cl.: A47J 31/44

(54) **Mehrwegeventilanordnung in einer Getränkezubereitungseinheit**
Multipath valve arrangement for use in beverage preparing unit
Installation de soupape multivoies dans une unité de préparation de boissons

(30) Priorität: 12.12.2008 DE 202008016400 U
(43) Veröffentlichungstag der Anmeldung: 16.06.2010
(73) Patentinhaber: Eugster/Frismag AG, 8580 Amriswil (CH)
(72) Erfinder: Müller, Thomas, 8590 Romanshorn (CH)
(74) Vertreter: Schubert, Siegmar

(56) Entgegenhaltungen:
- EP-A1- 1 561 407
- US-A- 5 498 757
- US-A1- 2005 223 911

## Beschreibung

Die Erfindung betrifft eine Mehrwegeventilanordnung nach dem Oberbegriff des Anspruchs 1. Siehe die Druckschrift EP-A-1 561 407, Paragraph [0015].

Zum Stand der Technik gehörende Mehrwegeventilanordnungen nach dem Oberbegriff des Anspruchs 1, die in Espressomaschinen eine wahlweise wechselnde Zubereitung von Heißmilch oder Milchschaum sowie ein Kaltspülen und Belüften der milchführenden Leitungen ermöglichen, können mit Magnetventilen realisiert werden, die entweder durch manuell betätigbare Kontakte gesteuert oder programmgesteuert in eine Durchschaltstellung oder in eine Sperrstellung gestellt werden. Derartige vielteilige Mehrwegeventilanordnungen erfordern mehrere Verbindungen und Anschlüsse zu den von ihnen beeinflussten Funktionseinheiten. Die Magnetventile weisen systembedingt im Milchstrom angeordnete bewegte mechanische Bauteile auf und sind schwierig zu spülen. Aufgrund ihrer Bauweise mit konstruktiv vorgegebenen Leitungsquerschnitten, die nur voll durchlässig oder aber gesperrt geschaltet werden können, führen diese Magnetventile bei gleicher die Milch ansaugenden Saugleistung stets den gleichen Milchstrom, wenn sie nicht gesperrt sind, unabhängig davon, ob der Milchstrom zur Heißmilchbereitung oder zur Milchschaumbereitung benötigt wird. Da für die Heißmilchzubereitung eine größere die Milch erhitzende Dampfmenge bzw. -energie benötigt wird als für die Milchschaumzubereitung, muss in Getränkezubereitungseinheiten, insbesondere Espressomaschinen, in denen eine solche Mehrwegeventilanordnung mit Mehrwegeventilen vorgesehen ist, für die Heißmilchzubereitung eine größere die Milch erhitzende Dampfmenge bzw. -energie als für die Milchschaumzubereitung vorgesehen sein, was erhöhte Herstellungskosten verursacht. Da weiterhin immer die gleiche Milchmenge durch den Dampfstrom erhitzt wird, der zum Erhitzen während einer vorgegebenen Zeit zugeführt wird, jedoch unterschiedliche Temperaturen aufweisen kann, erreicht die Milchtemperatur nicht immer den gewünschten Wert, sondern wird zu hoch oder bleibt zu niedrig.

Andere aus der Praxis bekannte Mehrwegeventilanordnungen, die jeweils ein mechanisches, von Hand zu betätigendes Mehrwegeventil aufweisen, können demgegenüber kompakter mit weniger Anschlüssen realisiert werden, ermöglichen jedoch in der Regel nur eingeschränkte Funktionen, ohne Kaltspülen und Belüften milchführender Leitungen, so dass in diesen unerwünschte Milchreste zurückbleiben können.

Der vorliegenden Erfindung liegt daher die Aufgabe zugrunde, mit einer kompakten Mehrwegeventilanordnung in einer Getränkezubereitungseinheit, insbesondere einer Espressomaschine, wählbar einer Heißmilchbereitung oder einer Milchschaumerzeugung Milch in jeweils optimal dosierter Menge bzw. entsprechendem Massenfluss zuzuführen und alternativ mit dieser Mehrwegeventilanordnung auch eine automatisierte, wirkungsvolle Reinigung der milchführenden Leitungen bzw. Strömungswege durchzuführen.

Diese Aufgabe wird mit einer Mehrwegeventilanordnung mit den Merkmalen des Anspruchs 1 gelöst.

Mit dem kompakten Mehrwegeventil dieser Mehrwegeventilanordnung werden nicht nur Strömungswege, insbesondere der Kaltmilch zur Bereitung von Heißmilch oder Milchschaum umgeschaltet, sondern es wird der Milchdurchfluss für beide Zubereitungsarten optimiert dosiert, indem der Kaltmilchdurchfluss für eine Heißmilchzubereitung gedrosselt wird in Relation zu dem Heißmilchdurchfluss für die Milchschaumzubereitung, so dass für beide Zubereitungsfälle eine gleich geringe Dampfversorgungsleistung zum Erhitzen der Milch ausreicht. Das Mehrwegeventil hat also eine zusätzliche Funktion der Drosselung zu der Grundfunktion der Auswahl eines von mehreren Durchschaltwegen bzw. Strömungswegen.

Die Drosselung wird durch Einstellung des Ventilkörpers gegenüber dem Gehäuse des Mehrwegeventils mit Öffnungen, die mit Strömungspfaden des Ventilkörpers kooperieren, bewirkt, und zwar mittels eines Schrittmotors, der die Ventilkörperstellung nach Maßgabe einer programmierbaren Steuerung einstellt.

Die unterschiedliche Drosselung bzw. ungedrosselte Durchleitung der Kaltmilch durch das Mehrwegeventil entspricht dem wirksamen Strömungsquerschnitt an dem Übergang zwischen dem Kaltmilcheingang bzw. Ventilausgang des Ventilgehäuses einerseits und der mit der Gehäuseöffnung in dem Gehäuse jeweils kooperierenden Strömungspfadöffnung des Ventilkörpers andererseits, der jeweils auf die Gehäuseöffnung eingestellt ist. Der wirksame Strömungsquerschnitt hängt also von einem Versatz der Gehäuseöffnung an dem Milcheingang gegenüber der Öffnung des Strömungspfads des auf die Gehäuseöffnung eingestellten Ventilkörpers ab.

Damit ist es auch möglich, eine Feinjustierung des Milchleitungsquerschnitts durchzuführen, die die von einem Dampfstrom angesaugte Milchdurchflussmenge durch den Strömungspfad des Mehrwegeventils regelt. Der ansaugende Dampfstrom wird insbesondere in einem Schäumkopf der Espressomaschine erzeugt. Die oben erwähnte Feinjustierung kann werksseitig durchgeführt werden, insbesondere um Fertigungstoleranzen auszugleichen. Die Feinjustierung kann aber auch später von dem Benutzer der Getränkezubereitungseinheit, insbesondere der Espressomaschine, auf Wunsch eingestellt werden oder aber mittels eines Temperatursensors, der die Milchtemperatur erfasst, zusammen mit einem Temperaturregler, um unabhängig von der Milchtemperatur auf eine gewünschte Temperatur erwärmte Heißmilch oder Milchschaum zu erhalten.

Weiterhin gestattet es die erfindungsgemäße Mehrwegeventilanordnung mit dem Mehrwegeventil, Stellungen einer Kaltwasserspülung der milchführenden Leitungen bzw. Strömungswege oder einer Belüftung, d.h. Leerlaufens dieser Wege, insbesondere von zur Spülung eingesetztem Kaltwasser, einzustellen, ohne hierfür in den milchführenden Leitungen gesonderte Magnetventile vorzusehen.

Durch den Antrieb des Ventilkörpers des Mehrwegeventils mittels des durch die programmierbare Steuerung steuerbaren Schrittmotors werden selbsttätig gegebenenfalls gedrosselte Durchschaltstellungen des Mehrwegeventils für die verschiedenen Funktionsabläufe eingestellt, nämlich Milchschaumbereitung oder Heißmilchbereitung, Kaltwasserspülung der Milchpfade und Entlüften der Milchpfade in der richtigen Reihenfolge.

Die Anwahl der jeweiligen Funktion erfolgt dabei mittels einer Wählgruppe und einer Programmspeicher- und Steuereinheit, die gemäß Anspruch 5 zu der programmierbaren Steuerung gehören.

Die wesentlichen alternativen Grundfunktionen der Mehrwegeventilanordnung sind in Anspruch 2 angegeben, wonach der Kaltmilcheingang an dem Gehäuse des Mehrwegeventils in einer ersten durch die programmierbare Steuerung gesteuerten Ventilkörperstellung ungedrosselt bzw. minimal gedrosselt mit dem Ventilausgang verbunden ist oder in einer zweiten durch die programmierbare Steuerung gesteuerten Ventilkörperstellung gedrosselt mit dem Ventilausgang verbunden ist. Der hiermit erreichte Vorteil der ausreichenden, verhältnismäßig geringen Heizleistungsversorgung bzw. Dampfversorgung bei Erwärmung der Kaltmilch auf die jeweils gewünschte Temperatur für Heißmilch oder Milchschaum wurde weiter oben erläutert. Weiterhin kann mit diesem Mehrwegeventil in einer dritten gesteuerten Ventilkörperstellung ein Spülen der milchbelasteten Leitung bzw. Strömungspfade und in einer vierten gesteuerten Ventilkörperstellung deren Belüftung erfolgen.

Es sind verschiedene Ausführungsformen zur Realisierung eines für die Durchführung der erfindungsgemäßen Mehrwegeventilanordnung geeigneten Mehrwegeventils möglich:

Gemäß Anspruch 3 kann der Ventilkörper als Hahn mit mehreren Ventilpfaden ausgebildet sein, der zur Einstellung eines gewünschten Durchschaltwegs gegebenenfalls mit Drosselung in dem Gehäuse drehbar ist, wobei das Gehäuse einen Außenzylinder um den zylindrischen Hahn bzw. Innenzylinder als Ventilkörper darstellt. Die Strömungspfade verlaufen insbesondere in einer Querschnittsebene in dem Innenzylinder radial. Bei diesem Mehrwegeventil sind die Öffnungen des Kaltwassereingangs, des Kaltmilcheingangs und die Luftöffnung in Umfangsrichtung des Außenzylinders bzw. Gehäuses angeordnet. Eine Drosselung erfolgt hierbei durch kleine Winkelverstellung der Drehstellung des Innenzylinders bzw. Hahns gegenüber einer vollen Durchlassposition.

Alternativ kann der Ventilkörper des Mehrwegeventils gemäß Anspruch 4 als Schieber bzw. Kolben ausgeführt werden, der in dem Gehäuse bzw. einem Außenzylinder verschiebbar ist. Mindestens ein Abschnitt des Strömungswegs des Kolbens bzw. Schiebers kann senkrecht zu einer Querschnittsebene des Kolbens verlaufen, um einen Ventilausgang wahlweise mit einem Kaltmilcheingang, einem Kaltwassereingang oder eine Luftöffnung zu verbinden. Die Drosselung erfolgt dabei durch Feinverschiebung des Kolbens bzw. Schiebers.

Das Mehrwegeventil ist zweckmäßig so in der Getränkezubereitungseinheit, insbesondere einer Espressomaschine, angeordnet, dass ein Schäumkopf mit dem Ventilausgang des Mehrwegeventils und einem Luft-Magnetventil in Strömungsverbindung steht. Wenn das Luft-Magnetventil Luft führt, wird in dem Schäumkopf Milchschaum erzeugt, andernfalls, wenn das Luft-Magnetventil keine Luft führt, wird Heißmilch erzeugt. In jedem Fall wird durch den Schäumkopf Kaltmilch durch das Mehrwegeventil hindurch angesaugt. Außerdem kann die Milchleitung in einer entsprechenden Einstellung des Mehrwegeventils mit angesaugtem Kaltwasser gespült werden, um das Kaltwasser aus der Milchleitung vor dem nächsten Milchleitungsvorgang zu entfernen, und belüftet werden.

Die voranstehende Anordnung kann zweckmäßig gemäß Anspruch 7 spezifiziert werden, dass der Schäumkopf über eine Milchleitung, in die das Luft-Magnetventil mündet, an dem Ventilausgang des Mehrwegeventils angeschlossen ist. Es werden damit die gleichen Funktionen wie voranstehend zu Anspruch 6 durchgeführt.

Ausführungsbeispiele der Erfindung werden im Folgenden anhand einer Zeichnung mit zehn Figuren erläutert, woraus sich weitere vorteilhafte Einzelheiten der Erfindung ergeben können. Es zeigen:
- Fig. 1a: eine erste Ausführungsform des Mehrwegeventils, welches über eine Milchleitung mit einem Schäumkopf verbunden ist, in einer ersten Ventilkörperstellung, wobei das Mehrwegeventil und ein Teil der Milchleitung in einem Längsschnitt dargestellt sind,
- Fig. 1b: die erste Ausführungsform wie in Fig. 1a, jedoch in einer zweiten Ventilkörperstellung,
- Fig. 1c: die erste Ausführungsform des Mehrwegeventils wie in den Fig. 1a und 1b, jedoch in einer dritten Ventilkörperstellung,
- Fig. 1d: die erste Ausführungsform des Mehrwegeventils wie in den Fig. 1a - 1c, jedoch in einer vierten Ventilkörperstellung,
- Fig. 2: ein Fluidschema einer Espressomaschine mit der ersten Ausführungsform des Mehrwegeventils,
- Fig. 3a: eine zweite Ausführungsform des Mehrwegeventils, welches über eine Milchleitung mit einem Schäumkopf verbunden ist, in einer ersten Ventilkörperstellung, wobei das Mehrwegeventil und ein Teil der Milchleitung in einem Längsschnitt dargestellt sind,
- Fig. 3b: die zweite Ausführungsform des Mehrwegeventils wie in Fig. 3a, jedoch in einer zweiten Ventilkörperstellung,
- Fig. 3c: die zweite Ausführungsform des Mehrwegeventils wie in den Fig. 3a und 3b, jedoch in einer dritten Ventilkörperstellung,
- Fig. 3d: die zweite Ausführungsform des Mehrwegeventils wie in den Fig. 3a - 3c, jedoch in einer vierten Ventilkörperstellung,
- Fig.4: ein Fluidschema einer Espressomaschine mit der zweiten Ausführungsform des Mehrwegeventils.

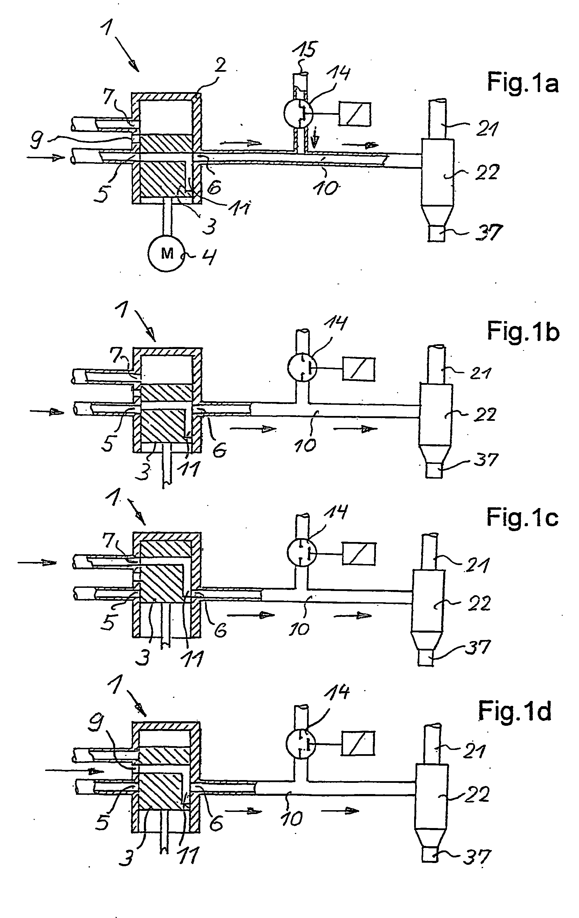

In Fig. 1 ist mit 1 ein Mehrwegeventil in einer ersten Ausführungsform bezeichnet, das als Gehäuse einen im Wesentlichen geschlossenen Außenzylinder 2 und als Schieber einen Kolben 3 aufweist. Der Kolben ist über einen Schrittmotor 4 linear verschiebbar. Das Gehäuse bzw. der Außenzylinder 2 weist einen Ventileingang 5, der ein Milcheingang ist, sowie einen Ventilausgang 6 auf. Der Milcheingang 5 ist weiter oben genauer als Kaltmilcheingang bezeichnet. Über dem Ventileingang 5 sind an dem Außenzylinder 2 als weiterer Ventileingang 7 ein Kaltwassereingang sowie eine Luftöffnung 9 angeordnet.

Eine Milchleitung 10 verbindet den Ventilausgang 6 mit einem Schäumkopf 22. In die Milchleitung 10 mündet eine Luftleitung 15, in der ein Magnetventil 14 angeordnet ist.

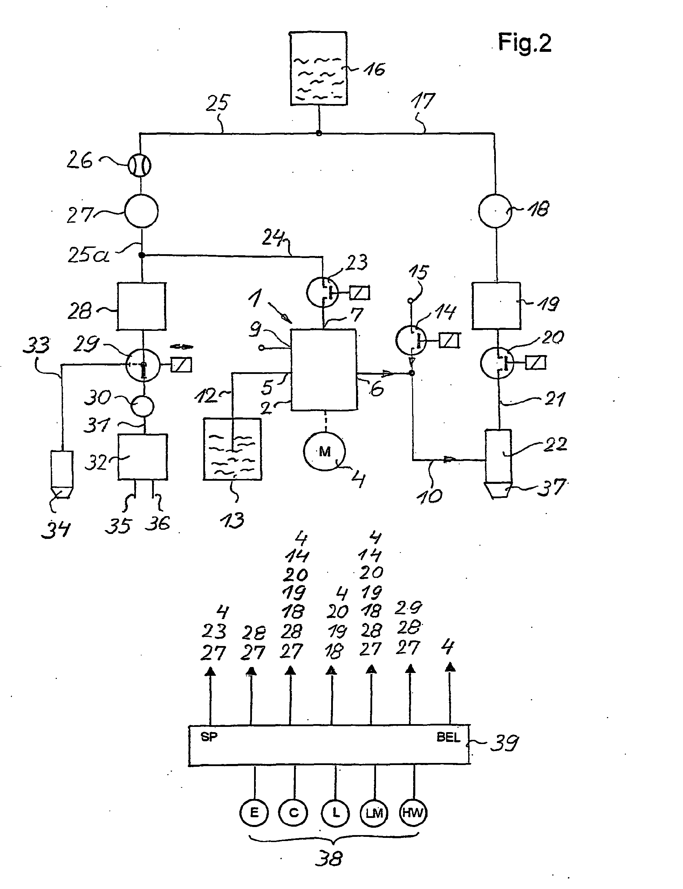

In Fig. 2 sind schematisch wesentliche Bestandteile einer Espressomaschine als Getränkezubereitungseinheit dargestellt, in der das Mehrwegeventil gemäß Fig. 1a eingesetzt ist.

Aus Fig. 2 ist ersichtlich, dass ein Wasserbehälter 16 über eine Kaltwasserleitung 17, eine Pumpe 18, einen Durchlauferhitzer 19, ein Magnetventil 20 und eine Dampfleitung 21 in einen Schäumkopf 22 mündet. Unter einem Auslass 37 des Schäumkopfes 22 kann ein nicht dargestelltes Auffanggefäß aufgestellt sein.

Die oben beschriebenen Teile der Fig. 2 betreffen die Bereitung von Heißmilch oder Milchschaum.

Zu der Durchführung der primären Espressomaschinenfunktionen, nämlich der Espresso- oder Kaffeeherstellung mittels eines Brühkopfs 32 mit zwei Brühkopfauslässen 35 und 36, steht dieser mit dem Heißwasserbehälter 16 über eine Kaltwasserleitung 25, einen Durchflussmesser 26, eine Pumpe 27, einen Durchlauferhitzer 28, ein Zweiwegemagnetventil 29 und eine Heißwasserleitung 31, in der ein Rücksperrventil 30 angeordnet ist, in Verbindung. Von dem Zweiwegemagnetventil 29 ist ferner eine Heißwasserleitung 33 abgezweigt, welche zu einem Heißwasserauslass 34 führt.

Aus Fig. 2 ist weiterhin ersichtlich, dass stromab der Pumpe 27 von der Kaltwasserleitung 25a eine Spülwasserleitung 24 abgezweigt ist, die über ein Magnetventil 23 zu dem Kaltwassereingang 7 des Mehrwegeventils 1 führt. Weiterhin ist der Milcheingang 5 des Mehrwegeventils 1 über eine Milchzufuhrleitung 12 mit einem Milchbehälter 13 verbunden.

In Fig. 2 ist auch schematisch eine programmierbare Steuerung mit einer Wählgruppe 38 und einer Programmspeicher- und Steuereinheit 39 angedeutet. Nicht bezeichnete Ausgänge der Programmspeicher- und Steuereinheit 39 führen zu den Elementen der Espressomaschine, die den Positionsnummern entsprechen, welche an den entsprechenden Ausgängen angegeben sind. Die Abkürzung "SP" bedeutet "Spülen" und die Abkürzung "BEL" bedeutet "Belüften". In der Wählgruppe, die ein dem gewählten Getränk entsprechenden Programmteil in der Programm- und Steuereinheit 39 zur Steuerung des Schrittmotors 4 aktiviert, bedeuten die Abkürzungen:
- E: = Espresso
- C: = Cappuccino
- L: = Heißmilch
- LM: = Latte Macchiato
- HW: = Heißwasser.

Die Funktionen "Spülen" und "Belüften" sind nicht in der Wählgruppe enthalten, weil sie automatisch aktiviert werden.

Es wird im Folgenden zunächst die Milchschaumbereitung besprochen:

Der Milchschaum kann zur Bereitung eines mit der Wählgruppe 38 in Fig. 2 ausgewählten Getränks dem gebrühten Kaffee zugesetzt werden, der den Brühkopfauslass 35 bzw. 36 verlässt, um Cappuccino oder Latte Macchiato herzustellen.

Zur Milchschaumbereitung wird Kaltwasser aus dem Wasserbehälter 16 über die Kaltwasserleitung 17 mittels der Pumpe 18 durch den Durchlauferhitzer 19 gepumpt, in dem das Kaltwasser zu Dampf erhitzt wird. Der Dampf strömt über das durchgeschaltete Magnetventil 20 und die Dampfleitung 21 in den Schäumkopf 22. Mittels einer in dem Schäumkopf 22 angeordneten, in der Zeichnung nicht dargestellten Venturidüse entsteht durch den durchströmenden Dampf ein Unterdruck, der wie im Einzelnen aus Fig. 1a ersichtlich, über die Milchleitung 10, den Milcheingang 5 an dem Gehäuse bzw. Außenzylinder 2 des Mehrwegeventils 1, einen Ventilpfad 11 des Kolbens bzw. Schiebers 3, den Ventilausgang 6 und die Milchleitung 12 Milch aus dem Milchbehälter 13 in den Schäumkopf 22 saugt. Die durch die Milchleitung 10 stromab des Mehrwegeventils 1 strömende Milch saugt über die Luftleitung 15 und das durchgeschaltete Magnetventil 14 Luft an, die zum Aufschäumen der Milch in dem Schäumkopf 22 dient. Der darin entstandene Milchschaum tritt aus dem Auslass 37 des Schäumkopfs 22 beispielsweise in ein Auffanggefäß aus.

Zur wahlweisen Heißmilchbereitung nach entsprechender Betätigung der Wählgruppe 38 wird zur Reduzierung der angesaugten Milchmenge der effektive Durchlaufquerschnitt bzw. Strömungsquerschnitt des Ventileingangs 5 und des Ventilausgangs 6 dem Mehrwegeventil 1 verkleinert, indem mittels des Schrittmotors 4 der Kolben bzw. Schieber 3 des Mehrwegeventils 1 so verschoben wird, dass - siehe Fig. 1b - der Ventilpfad 11 des Kolbens nur partiell mit dem Eingang 5 und dem Ausgang 6 des Außenzylinders bzw. Gehäuses 2 fluchtet. Mit der dadurch im Betrieb erreichten Reduzierung der angesaugten Milchmenge wird dem Umstand Rechnung getragen, dass in Haushaltsespressomaschinen in der Regel nicht genügend Wärmeenergie zur Verfügung steht, um mittels der in dem Durchlauferhitzer 19 erzeugten Dampfmenge eine große Milchmenge im Durchlauf bzw. einen größeren Milchdurchfluss zu erhitzen.

Der den Kolben bzw. Schieber 3 antreibende Schrittmotor ist auf die spezielle Verwendung zur Drosselung des Durchflusses durch das Mehrwegeventil 1 ausgewählt. Insbesondere arbeitet der Schrittmotor 1 mit kleinen Schritten, um eine Feinjustierung des Milchdurchlaufquerschnitts durchzuführen, die den Durchfluss der von dem Schäumkopf 22 angesaugten Milch bzw. die Milchmenge regelt. Wie erwähnt, kann die Feinjustierung werksseitig durchgeführt werden, um Fertigungstoleranzen auszugleichen oder aber von dem Benutzer subjektiv gewählt werden oder selbsttätig mittels eines Temperatursensors und Temperaturreglers erfolgen, der die Milchtemperatur auf eine vorgegebene Temperatur einregelt.

Bezugnehmend auf Fig. 2 wird zur Heißmilchbereitung Kaltwasser aus dem Wasserbehälter 16 über die Kaltwasserleitung 17 zur Pumpe 18 durch den Durchlauferhitzer 19 gepumpt, in welchem das Kaltwasser zu Dampf erhitzt wird, der durch das durchgeschaltete Magnetventil 20 und die Dampfleitung 21 in den Schäumkopf 22 gepumpt wird. Mittels der in dem Schäumkopf 22 angeordneten Venturidüse entsteht durch den durchströmenden Dampf ein Unterdruck, der über die Milchzulaufleitung 12 den Ventileingang bzw. Milcheingang 5 des Außenzylinders bzw. Gehäuses 2, den aus Fig. 1b ersichtlichen Ventilpfad 11 des Kolbens bzw. Schiebers 3, den Ventilausgang 6 des Außenzylinders bzw. Gehäuses 2 und die Milchleitung 10 Milch aus dem Milchbehälter 13 in den Schäumkopf 22 saugt. Da während dieses Vorgangs das Magnetventil 14 nicht durchgeschaltet ist, wird der durch die Milchleitung 10 strömenden Milch keine Luft zugesetzt. Die in den Schäumkopf 22 gelangende Milch wird während des Durchlaufs durch den Schäumkopf 22 durch den Dampf erhitzt, der über die Dampfleitung 21 in den Schäumkopf eingespeist wird. Die erhitzte Milch tritt aus dem Auslass 37 des Schäumkopfs 22 in ein Auffanggefäß aus.

Ein Kaltspülen der Milchleitung 10, des Schäumkopfes 22 sowie des Ventilpfads 11 des Kolbens bzw. Schiebers 3 erfolgt selbsttätig durch den Steuereinheit- und Programmspeicher 39 gesteuert bei Erreichen vorgegebener Bedingungen, z.B. einer Anzahl Heißmilch- oder Milchschaumbereitungsvorgängen. Der Spülvorgang ist aus hygienischen Gründen vorgesehen und wird mit Kaltwasser durchgeführt, da ein Spülvorgang mit Heißwasser bzw. Heißdampf zu einem Festbacken bzw. Anbrennen von Milchresten führen könnte.

Für den Spülvorgang wird der Kolben bzw. Schieber 3, wie aus Fig. 1c ersichtlich, so positioniert, dass der Ventilpfad 11 den Ventileingang bzw. Kaltwassereingang 7 mit dem Ventilausgang 6 verbindet, und zwar mit maximalem Durchlass ohne Drosselung. Dadurch wird, auch bezugnehmend auf Fig. 2, Kaltwasser aus dem Kaltwasserbehälter 16 über die Kaltwasserleitung 25 mittels der Pumpe 27 über die Spülwasserleitung 24, das durchgeschaltete Magnetventil 23 und den Kaltwasserventileingang 7 des Mehrwegeventils 1 über den Ventilpfad 11 des Kolbens bzw. Schiebers 3 und den Ausgang 6 des Mehrwegeventils 1 durch die milchbelastete Milchleitung 10 und den Schäumkopf 22 gepumpt.

Ein Belüften der Milchleitung 10 und des Strömungspfads 11 des Mehrwegeventils 1 ist notwendig, um diese leerlaufen zu lassen, bevor ein erneuter Heißmilch- oder Milchschaumbereitungsvorgang beginnen kann. Zum Belüften wird der Kolben bzw. Schieber 3 mittels des Schrittmotors 4 in die Position gemäß Fig. 1d eingestellt, d.h. soweit abgesenkt, dass die Luftöffnung in dem Außenzylinder bzw. Gehäuse 2 über den Ventilpfad 11 mit dem Ausgang 6 des Mehrwegeventils verbunden wird. Hierzu wird der in der Zeichnung senkrechte Abschnitt des Ventilpfads teilweise genutzt, der bei der Kaltwasserspülung gemäß Fig. 1c vollständig durchströmt wird und bei der Heißmilcherzeugung gemäß Fig. 1b zum geringen Teil durchströmt ist, nicht aber bei der Milchschaumbereitung gemäß Fig. 1a.

In der Position des Kolbens bzw. Schiebers 3 kann somit ein Belüften und damit Leerlaufen des Ventilpfads 11, der Milchleitung 10 und auch des Schäumkopfs 22 erfolgen.

Mit der in Fig. 2 dargestellten Espressomaschine kann wie üblich Espresso zubereitet werden: Hierzu wird Kaltwasser aus dem Kaltwasserbehälter 16 über die Kaltwasserleitung 25 mittels der Pumpe 27 weiter über die Kaltwasserleitung 25a durch den Durchlauferhitzer 28 gepumpt, indem das Kaltwasser zu Heißwasser erhitzt wird. Das Heißwasser strömt über die in Fig. 2 angedeuteten Ventilstellung des Zweiwegemagnetventils weiter über das Rücksperrventil 30 in den Brühkopf 32. Das Rücksperrventil 30 verhindert in bestimmten Phasen der Kaffeesudbereitung ein Rücksaugen aus dem Brühkopf. Der gebrühte Kaffee tritt über die Brühkopfauslässe 36 und 37 in ein Auffanggefäß aus. Die zur Kaffeebereitung erforderliche Wassermenge wird mittels des oben erwähnten Durchflussmessers 26 begrenzt.

Zur alternativ möglichen Bereitung von Heißwasser strömt das Kaltwasser wie bei der Espressozubereitung, jedoch gegebenenfalls in anders dimensionierter Menge, die durch den Durchflussmesser 26 bestimmt ist, zum Erhitzen durch den Durchlauferhitzer 28 und anschließend über das zu der Heißwasserleitung 33 umgeschaltete Zweiwegemagnetventil 29, dessen Umschaltstellung in Fig. 2 mit einer durchbrochenen Linie angedeutet ist. Das Heißwasser gelangt über die Heißwasserleitung 33 in den Heißwasserauslass 34, aus dem es zur Bereitung eines anderen Getränks aufgefangen werden kann.

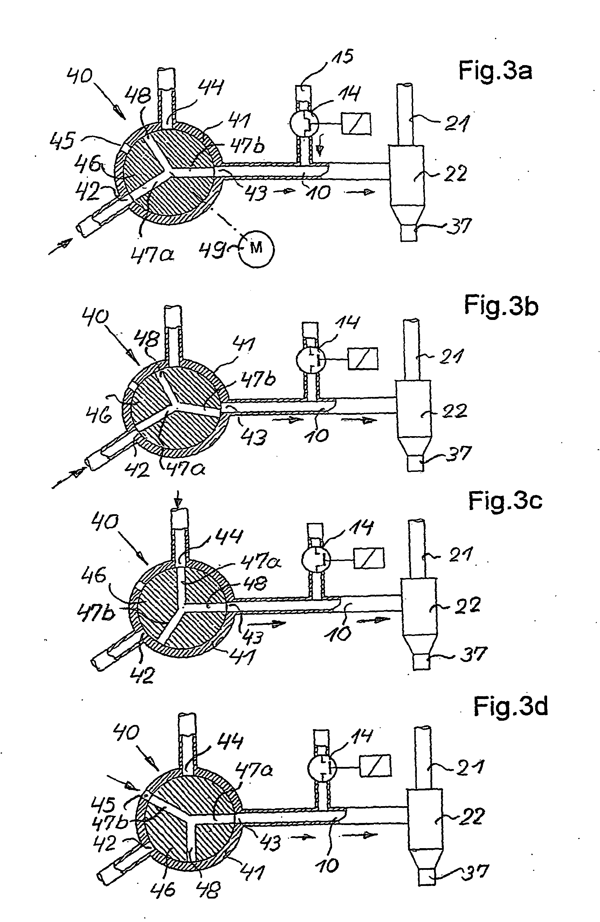

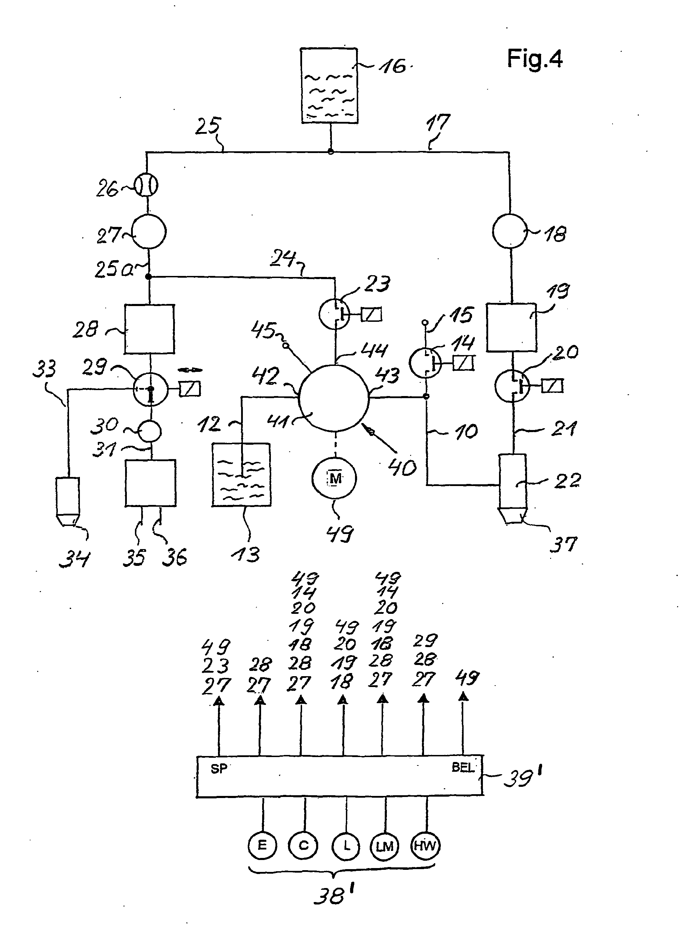

Die zweite Ausführungsform der Espressomaschine als Getränkezubereitungseinheit gemäß Fig. 4 unterscheidet sich von derjenigen gemäß Fig. 2 im Wesentlichen durch eine andere Realisierung des Mehrwegeventils, welches hier mit einem Ventilkörper als Hahn mit mehreren Ventilpfaden ausgebildet ist, die in den Fig. 3a - 3d im Einzelnen dargestellt sind. Der Schrittmotor 49 und die Programmspeicher- und Steuereinheit 39' sind an die Ausführungsform des Mehrwegeventils mit einem drehbaren Hahn, der somit als Innenzylinder in einen als Außenzylinder geformten Gehäuse durch den Schrittmotor 49 drehbar angeordnet ist, angepasst. Das als Außenzylinder geformte Gehäuse 41 weist wiederum einen Ventileingang 42 als Milcheingang bzw. Kaltmilcheingang, einen Ventileingang 44 als Kaltwassereingang, einen Ventilausgang 43 sowie eine Luftöffnung 45 auf, die, wie in den Fig. 3a - 3d gezeigt, in Umfangsrichtung des Außenzylinders bzw. Gehäuses 41 zueinander versetzt sind. Zur wahlweisen vollständigen oder gedrosselten Verbindung des Ventileingangs als Milcheingang 42, des Ventileingangs als Kaltwassereingang 44 oder der Luftöffnung 45 sind in dem Innenzylinder bzw. Hahn 46 des Mehrwegeventils 40 Ventilpfade 47a, 47b und 48 in Umfangsrichtung des Innenzylinders 46, wie im Einzelnen aus den Fig. 3a - 3d ersichtlich, versetzt ausgeformt.

Im Übrigen sind in dem Ausführungsbeispiel gemäß den Fig. 3a - 3d und 4 mit dem ersten Ausführungsbeispiel übereinstimmende Bezugszeichen vorgesehen.

Für eine Milchschaumzubereitung wird gemäß Fig. 3a der Innenzylinder bzw. Hahn 46 mittels des Schrittmotors 49 so gedreht, dass der Ventilpfad 47a mit dem Ventileingang bzw. Milcheingang 42 fluchtet und der Ventilpfad 47b, der sich an den Ventilpfad 47a anschließt, mit dem Ventilausgang 43 fluchtet.

In dieser Position des Mehrwegeventils 40 wird, nun bezugnehmend auf Fig. 4, Kaltwasser aus dem Kaltwasserbehälter 16 über die Kaltwasserleitung 17 mittels der Pumpe 18 durch den Durchlauferhitzer 19 gepumpt, indem das Kaltwasser zu Dampf erhitzt wird. Der aus dem Durchlauferhitzer ausströmende Dampf wird weiter über das durchgeschaltete Magnetventil 20 und die Dampfleitung 21 in den Schäumkopf 22 eingespeist. Die in Fig. 4 nicht dargestellte, in dem Schäumkopf 22 angeordnete Venturidüse erzeugt durch den durchströmenden Dampf einen Unterdruck, der über die Milchzufuhrleitung 12, den Ventileingang als Milcheingang 42 des Mehrwegeventils 42, den Ventilströmungspfaden 47a und 47b des Innenzylinders bzw. Hahns 46, den Ventilausgang 43 des Mehrwegeventils 40 und die Milchleitung 10 Milch aus dem Milchbehälter 13 bis in den Schäumkopf 22 saugt. Die durch die Milchleitung 10 strömende Milch saugt dabei über die Luftleitung 15 und das durchgeschaltete Magnetventil 14 Luft an, die zum Aufschäumen in dem Schäumkopf 22 dient. Der entstandene Milchschaum tritt aus dem Auslass 37 des Schäumkopfs in ein Auffanggefäß aus.

Zur Heißmilchbereitung treten in der Espressomaschine gemäß den Fig. 3a und 4 mit den nachfolgend besprochenen Ausnahmen die gleichen Funktionen wie bei der Milchschaumbereitung auf:
Um der in Haushaltespressomaschinen in der Regel niedrig begrenzten, zur Verfügung stehenden Wärmeleistung Rechnung zu tragen und um mit der dementsprechend erzeugten Dampfmenge eine größere Menge Milch im Durchlauf zu erhitzen, wird zur Reduzierung des angesaugten Milchdurchflusses der Durchlaufquerschnitt bzw. Strömungsquerschnitt des Ventileingangs als Milcheingang 42 und des Ventilausgangs 43 in dem Mehrwegeventil 40 gegenüber der Situation bei Milchschaumerzeugung verkleinert, indem mittels des Schrittmotors 49 der Innenzylinder bzw. Hahn 46 des Mehrwegeventils 40 so gedreht wird, dass die Ventilpfade 47a, 47b des Innenzylinders bzw. Hahns 46 nicht vollständig mit dem Ventileingang als Milcheingang 42 bzw. dem Ausgang 43 des Mehrwegeventils 40 fluchten.

Außerdem kann der den Innenzylinder bzw. Hahn 46 antreibende Schrittmotor 49, der geeignet ist, auf die vorliegende Verwendung abgestimmte kleine Schritte auszuführen, eine Feinjustierung des Durchlaufquerschnitts bzw. Strömungsquerschnitts für den von dem Schäumkopf 22 angesaugten Milchdurchfluss einstellen. Wie erwähnt, kann die Feinjustierung werksseitig durchgeführt werden, um Fertigungstoleranzen auszugleichen, oder von dem Benutzer der Espressomaschine fallweise gewählt werden oder automatisch mittels eines Temperatursensors und Temperaturreglers eine vorgegebene Temperatur der Milch eingeregelt werden.

Die übrigen Vorgänge zur Heißmilchbereitung laufen wie zu dem weiter oben beschriebenen Ausführungsbeispiel ab.

Zum Kaltspülen der Ventilpfade 47a und 47b des Innenzylinders bzw. Hahns 46, der milchbelasteten Milchleitung 10 und des Schäumkopfs 22 wird der Innenzylinder bzw. Hahn 46 mittels des Schrittmotors 49 so gedreht, dass der Ventilpfad 47a mit dem Ventileingang als Kaltwassereingang 44 des Mehrwegeventils 10 und der Ventilpfad 48 mit dem Ausgang 43 des Mehrwegeventils 40 fluchten. Daran anschließend kann aus dem Kaltwasserbehälter 16 über die Kaltwasserleitung 25 mittels der Pumpe 27 Kaltwasser über die Spülwasserleitung 24, das durchgeschaltete Magnetventil 23 und den Ventileingang als Kaltwassereingang 44 des Mehrwegeventils 40 durch die Ventilpfade 47a und 48 des Innenzylinders bzw. Hahns 46 und den Ventilausgang 43 des Mehrwegeventils 40 durch die milchbelastete Milchleitung 10 und den Schäumkopf 22 gepumpt werden.

Zum Belüften der milchbelasteten Strömungswege, um diese leerlaufen zu lassen, wird der Innenzylinder bzw. Hahn 46 des Mehrwegeventils 40 gemäß Fig. 3d mittels des Schrittmotors 49, siehe auch Fig. 3a und 4, so gedreht, dass die Luftöffnung 45 des Außenzylinders bzw. Gehäuses 41 mit dem Ventilpfad 47b fluchtet und der Ventilausgang 43 des Mehrwegeventils 40 mit dem sich an den Ventilpfad 47b hier anschließenden Ventilpfad 47a fluchtet. Damit erfolgt eine Belüftung und Leerlaufen der Ventilpfade 47a und 47b sowie der Milchleitung 10 und des Schäumkopfs 22.

Eine Espressozubereitung und eine alternative Heißwasserzubereitung können mit der zweiten Ausführungsform der Espressomaschine gemäß Fig. 4 wie zu der ersten Ausführungsform anhand Fig. 2 beschrieben erfolgen.

### Bezugszahlenliste

- 1: Mehrwegeventil
- 2: Außenzylinder (Gehäuse)
- 3: Kolben (Schieber)
- 4: Schrittmotor
- 5: Ventileingang
(Milcheingang)
- 6: Ventilausgang
- 7: Ventileingang
(Kaltwassereingang)
- 8:
- 9: Luftöffnung
- 10: Milchleitung
- 11: Ventilpfad
- 12: Milchzufuhrleitung
- 13: Milchbehälter
- 14: Luft-Magnetventil
- 14': Ausgang des Luft-Magnetventils
- 15: Luftleitung
- 16: Kaltwasserbehälter
- 17: Kaltwasserleitung
- 18: Pumpe
- 19: Durchlauferhitzer
- 20: Magnetventile
- 21: Dampfleitung
- 22: Schäumkopf
- 23: Magnetventil
- 24: Spülwasserleitung
- 25: Kaltwasserleitung
- 25a: Kaltwasserleitung
- 26: Durchflussmesser
- 27: Pumpe
- 28: Durchlauferhitzer
- 29: Zweiwege-Magnetventil
- 30: Rücksperrventil
- 31: Heißwasserleitung
- 32: Brühkopf
- 33: Heißwasserleitung
- 34: Heißwasserauslass
- 35: Brühkopfauslass
- 36: Brühkopfauslass
- 37: Schäumkopfauslass
- 38: Wählgruppe
- 38': Wählgruppe
- 39: Programmspeicher-
und Steuereinheit
- 39': Programmspeicher-
und Steuereinheit
- 40: Mehrwegeventil
- 41: Außenzylinder (Gehäuse)
- 42: Ventileingang
(Milcheingang)
- 43: Ventilausgang
- 44: Ventileingang
(Kaltwassereingang)
- 45: Luftöffnung
- 46: Innenzylinder (Hahn)
- 47a: Ventilpfad
- 47b: Ventilpfad
- 48: Ventilpfad
- 49: Schrittmotor

## Patentansprüche

1. Mehrwegeventilanordnung in einer Getränkezubereitungseinheit, insbesondere einer Espressomaschine, in der wahlweise verschiedene Getränke herstellbar sind und die mindestens einen Kaltmilcheingang (5, 42), einen Kaltwassereingang (7, 44), einen Ventilausgang (6, 43) sowie mindestens einen Ventilkörper (3, 46) aufweist, über den der Kaltmilcheingang (5, 42) oder der Kaltwassereingang (7, 44) mit dem Ventilausgang (6, 43) verbindbar ist,
**dadurch gekennzeichnet,**
**dass** die Mehrwegeventilanordnung ein Mehrwegeventil (1, 40) mit einem Gehäuse (2, 41) umfasst, das den Kaltmilcheingang (5, 42), den Kaltwassereingang (7, 44), den Ventilausgang (6, 43) sowie eine Luftöffnung (9, 45) aufweist und in dem ein Ventilkörper (3, 46) geeignet ist, den Kaltmilcheingang (5, 42) mit einstellbarer Drosselung mit dem Ventilausgang (6, 43) zu verbinden,
**dass** der Ventilkörper (3, 46) durch einen Schrittmotor (4, 49) einstellbar ist und
**dass** der Schrittmotor (4, 49) mit einer programmierbaren Steuerung (38, 39; 38', 39') der Ventilkörperstellung versehen ist.

2. Mehrwegeventilanordnung nach Anspruch 1,
**dadurch gekennzeichnet,**
**dass** der Kaltmilcheingang (5, 42) in einer ersten durch die programmierbare Steuerung (38, 39; 38', 39') gesteuerten Ventilkörperstellung ungedrosselt bzw. minimal gedrosselt mit dem Ventilausgang (6, 43) verbunden ist und in einer zweiten durch die programmierbare Steuerung (38, 39; 38', 39') gesteuerten Ventilkörperstellung gedrosselt mit dem Ventilausgang (6, 43) verbunden ist,
**dass** der Kaltwassereingang (7, 44) in einer dritten durch die programmierbare Steuerung (38, 39; 38', 39') gesteuerten Ventilkörperstellung ungedrosselt mit dem Ventilausgang (6, 43) verbunden ist und
**dass** die Luftöffnung (9, 45) in einer vierten, durch die programmierbare Steuerung (38, 39; 38', 39') gesteuerten Ventilkörperstellung mit dem Ventilausgang (6, 43) verbunden ist.

3. Mehrwegeventilanordnung nach einem der Ansprüche 1 und 2,
**dadurch gekennzeichnet,**
**dass** der Ventilkörper als Hahn (46) mit mehreren Ventilpfaden (47a, 47b, 48) ausgebildet ist.

4. Mehrwegeventilanordnung nach einem der Ansprüche 1-3,
**dadurch gekennzeichnet,**
**dass** der Ventilkörper als Schieber (3) mit mindestens einem Ventilpfad (11) ausgebildet ist.

5. Mehrwegeventilanordnung nach einem der vorangehenden Ansprüche,
**dadurch gekennzeichnet,**
**dass** die programmierbare Steuerung eine Wählgruppe (38, 38') und eine Programmspeicher- und Steuereinheit (39, 39') umfasst.

6. Mehrwegeventilanordnung nach einem der vorangehenden Ansprüche,
**dadurch gekennzeichnet,**
**dass** ein Schäumkopf (22) mit dem Ventilausgang (6, 43) des Mehrwegeventils und einem Luft-Magnetventil (14) in Strömungsverbindung steht.

7. Mehrwegeventilanordnung nach Anspruch 6,
**dadurch gekennzeichnet,**
**dass** der Schäumkopf (22) über eine Milchleitung (10), in die ein Ausgang (14') des Luft-Magnetventils (14) mündet, an den Ventilausgang (6, 43) des Mehrwegeventils (1, 40) angeschlossen ist.

## Claims

1. Multipath valve arrangement for use in a beverage preparing unit, particularly an espresso machine, in which selectively various beverages may be prepared and which includes at least one cold milk inlet (5, 42), a cold water inlet (7, 44), a valve outlet (6, 43) and at least one valve body (3, 46) via which either the cold milk inlet (5, 42) or the cold water inlet (7, 44) may be connected with the valve outlet (6, 43)
**characterized in**
**that** the multipath valve arrangement comprises a multipath valve (1, 40) having a housing (2, 41) which includes the cold milk inlet (5, 42), the cold water inlet (7, 44), the valve outlet (6, 43) and an air opening (9, 45), and in which a valve body (3, 46) is suited to connect the cold milk inlet (5, 42) by adjustable throttling with the valve outlet 6, 43),
**that** the valve body (3, 46) is adjustable by a stepping motor (4, 49) and
**that** the stepping motor (4, 49) is provided with a programmable control (38, 39; 38', 39') of the valve body position.

2. Multipath valve arrangement according to claim 1,
**characterized in**
**that** in a first valve body position controlled by the programmable control (38, 39; 38', 39'), the cold milk inlet (5, 42) is connected, non-throttled or slightly throttled, with the valve outlet (6, 43) and in a second valve body position controlled by the programmable control (38, 39; 38', 39') is connected, throttled, with the valve outlet (6, 43),
**that**, in a third valve body position controlled by the programmable control (38, 39; 38' 39'), the cold water inlet (7, 44) is connected, non-throttled, with the valve outlet (6, 43) and
**that**, in a fourth valve body position controlled by the programmable control (38, 39; 38', 39'), the air opening (9, 45) is connected with the valve outlet (6, 43).

3. Multipath valve arrangement according to one of claims 1 and 2,
**characterized in**
**that** the valve body is designed as a stopcock (46) having a plurality of valve paths (47a, 47b, 48).

4. Multipath valve arrangement according to one of claims 1 to 3,
**characterized in**
**that** the valve body is designed as a slide valve (3) having at least one valve path (11).

5. Multipath valve arrangement according to one of the foregoing claims,
**characterized in**
**that** the programmable control comprises a selector group (38, 38') and a program storage and control unit (39, 39').

6. Multipath valve arrangement according to one of the foregoing claims,
**characterized in**
**that** a frothing head (22) is in flow connection with the valve outlet (6, 43) of the multipath valve and an air solenoid valve (14).

7. Multipath valve arrangement according to claim 6,
**characterized in**
**that** the frothing head (22) is connected via a milk duct (10) into which opens an outlet (14') of the air solenoid valve (14) to a valve outlet (6, 43) of the multipath valve (1, 40).

## Revendications

1. Agencement de vanne à plusieurs voies dans une unité de préparation de boissons, en particulier dans une machine à expresso, dans laquelle différentes boissons peuvent être produites sélectivement et qui présente au moins une entrée de lait froid (5, 42), une entrée d'eau froide (7, 44), une sortie de vanne (6, 43), ainsi qu'au moins un corps de vanne (3, 46) au moyen duquel l'entrée de lait froid (5, 42) ou l'entrée d'eau froide (7, 44) peut être reliée à la sortie de vanne (6, 43), par lequel l'agencement de vanne à plusieurs voies comprend une vanne à plusieurs voies (1, 40) comportant un boîtier (2, 41) qui présente l'entrée de lait froid (5, 42), l'entrée d'eau froide (7, 44), la sortie de vanne (6, 43), ainsi qu'une ouverture d'air (9, 45), et dans lequel un corps de vanne (3, 46) est approprié pour relier l'entrée de lait froid (5, 42) à la sortie de vanne (6, 43) avec un étranglement réglable, en ce que le corps de vanne (3, 46) est réglable par un moteur pas-à-pas (4, 49) et en ce que le moteur pas-à-pas (4, 49) est muni d'une commande programmable (38, 39 ; 38', 39') de la position du corps de vanne.

2. Agencement de vanne à plusieurs voies selon la revendication 1, **caractérisé en ce que**, dans une première position du corps de vanne commandée par la commande programmable (38, 39 ; 38', 39'), l'entrée de lait froid (5, 42) est reliée à la sortie de vanne (6, 43) de façon non étranglée ou étranglée au minimum, et **en ce que**, dans une deuxième position du corps de vanne commandée par la commande programmable (38, 39 ; 38', 39'), elle est reliée à la sortie de vanne (6, 43) de façon étranglée, **en ce que**, dans une troisième position du corps de vanne commandée par la commande programmable (38, 39 ; 38', 39'), l'entrée d'eau froide (7, 44) est reliée à la sortie de vanne (6,43) de façon non étranglée, et **en ce que**, dans une quatrième position du corps de vanne commandée par la commande programmable (38, 39 ; 38', 39'), l'ouverture d'air (9, 45) est reliée à la sortie de vanne (6, 43).

3. Agencement de vanne à plusieurs voies selon l'une des revendications 1 et 2, **caractérisé en ce que** le corps de vanne est exécuté en tant que robinet à boisseau (46) présentant plusieurs passages de vanne (47a, 47b, 48).

4. Agencement de vanne à plusieurs voies selon l'une des revendications 1 à 3, **caractérisé en ce que** le corps de vanne est exécuté en tant que robinet-vanne (3) possédant au moins un passage de vanne (11).

5. Agencement de vanne à plusieurs voies selon l'une des revendications précédentes, **caractérisé en ce que** la commande programmable comprend un groupe de sélection (38, 38') et une unité à mémoire de programme et unité de commande (39, 39'),

6. Agencement de vanne à plusieurs voies selon l'une des revendications précédentes, **caractérisé en ce qu'**une tête mousseuse (22) est en communication pour l'écoulement avec la sortie de vanne (6, 43) de la vanne à plusieurs voies et avec une électrovanne d'air (14).

7. Agencement de vanne à plusieurs voies selon la revendication 6, **caractérisé en ce que** la tête mousseuse (22) est reliée à la sortie de vanne (6, 43) de la vanne à plusieurs voies (1, 40) par une conduite de lait (10) dans laquelle débouche une sortie (14') de l'électrovanne d'air (14).
